# EUROPEAN PATENT SPECIFICATION

(11) **EP 1 763 434 B1**
(45) Date of publication and mention of the grant of the patent: **20.08.2008**
(21) Application number: 05739445.4
(22) Date of filing: 17.05.2005
(51) Int. Cl.: B31B 1/84, B31B 3/28

(54) **A MACHINE FOR FORMING CONTAINERS FOR LIQUIDS**
MASCHINE ZUR HERSTELLUNG VON BEHÄLTERN FÜR FLÜSSIGKEITEN
MACHINE POUR LA FORMATION DE CONTENANTS A LIQUIDE

(30) Priority: 18.05.2004 IT BO20040312
(43) Date of publication of application: 21.03.2007
(73) Proprietor: AZIONARIA COSTRUZIONI MACCHINE AUTOMATICHE-A.C.M.A.-S.p.A., 40131 Bologna (IT)
(72) Inventor: BOLDRINI, Fulvio, 44100 Ferrara (IT); GHIOTTI, Roberto, 40050 Calderino di Monte San Pietro (IT); CAVALLARI, Stefano, 40135 Bologna (IT)
(74) Representative: Ghioni, Carlo Raoul Maria
(86) International application number: PCT/IB2005/001477
(87) International publication number: WO 2005/113222

(56) References cited:
- WO-A-99/08939
- WO-A-03/078258
- WO-A-03/086880
- WO-A-20/04011238
- US-A- 5 088 642

## Description

### Technical Field

The present invention relates to a machine for forming containers, typically containers for edible products.

In particular, the present invention relates to a machine for the manufacture of containers fashioned from blanks of multilayer paper material coated with a layer of food-safe material suitable for preserving liquid products, such as milk, fruit juices, yoghurt and the like.

### Background Art

US Patent 5,088,642 discloses a container of the type in question, comprising a tubular body closed at the bottom end in familiar manner and presenting a substantially square cross section, referable to its longitudinal axis, also a neck of plastic material associated coaxially with the tubular body.

The top part of the neck affords a pouring mouth that can be closed by means of a screw cap, whilst the bottom part is moulded with a conical flange that can be fastened hermetically to the open top end presented by the tubular body of the container.

The operation of matching the square top end of the container body to the conical flange of the neck in such a way as to obtain a fluid-tight seal is especially difficult, and involves subjecting the top end of the container to a sequence of complex folding steps, as well as deforming the conical flange. A machine for forming such containers is disclosed in document WO-A-2004/011238.

The object of the present invention is to provide a machine capable of forming a container furnished with a neck disposed coaxially to a tubular body, such as will be unaffected by the drawbacks mentioned above.

### Disclosure of the Invention

The stated object is duly realized, according to the present invention, in a machine for forming containers of which the features are as recited in claim 1.

The invention will now be described in detail, by way of example, with the aid of the accompanying drawings, in which:
- figure 1 illustrates a machine for forming containers according to the present invention, viewed schematically in elevation and part block diagram;

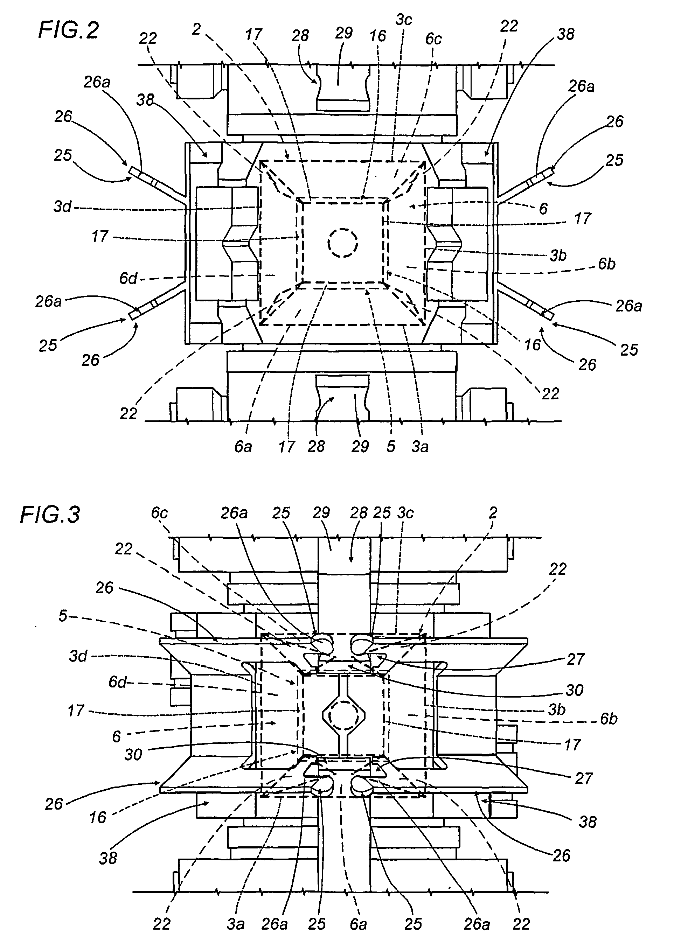

- figures 2 and 3 are enlarged perspective views showing two details of the machine, illustrated in two different and successive operating steps of the process by which a container is formed;
- figures 4 and 5 show an operating unit forming part of the machine in figure 1, viewed schematically in perspective and illustrated in two different operating conditions;
- figures 6 and 7 illustrates a container formed by the machine of figure 1, viewed in perspective and in the course of two successive processing steps;
- figure 8 illustrates a further container formed by the machine of figure 1, viewed in perspective;
- figure 9 is a schematic and fragmentary view illustrating a second embodiment of the machine in figure 1.

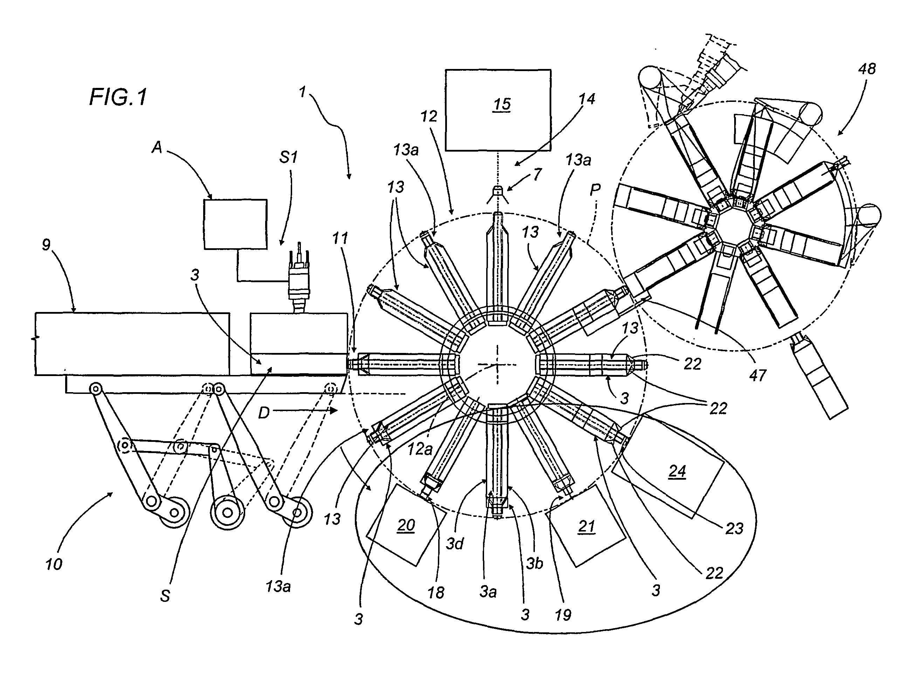

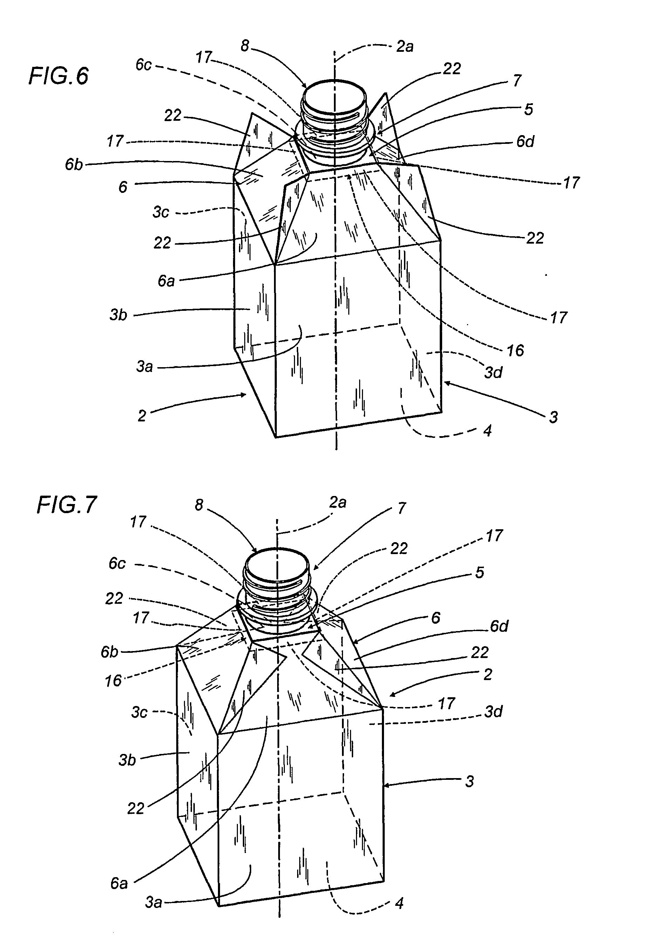

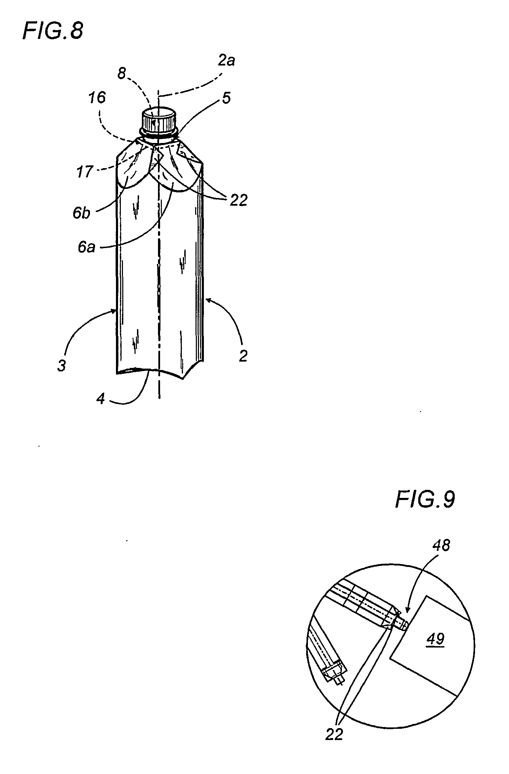

With reference to figure 1, numeral 1 denotes a machine for forming containers 2, in particular for food products, of the type illustrated in figures 7 and 8.

The container 2 (see figure 7) comprises a tubular body 3 appearing square in section, relative to a predominating longitudinal axis 2a, and presenting four walls denoted 3a, 3b, 3c and 3d, arranged in two mutually opposed and parallel pairs.

The tubular body 3 is enclosed at one end to form the bottom 4 of the container 2, whilst the opposite top end 5 presents a frustopyramidal portion 6 terminating in a neck 7; the neck 7 in turn presents a mouth 8 such as can be closed by means of a screw cap, not illustrated.

Referring to figure 8, it will be seen that the container 2 might also comprise a tubular body 3 of substantially circular section, enclosed at one end to form the bottom 4 and with the opposite top end 5 again presenting a frustopyramidal portion 6 that terminates in a neck 7, affording a mouth 8 that can be closed by means of a screw cap.

The aforementioned frustopyramidal portion 6 thus constitutes a connecting portion, positioned between the tubular body 3 and the neck 7, which presents four side walls 6a, 6b, 6c and 6d contiguous to the four walls 3a, 3b, 3c and 3d, respectively, of the tubular body 3.

More particularly, and with reference, for a fuller description, to the international patent application published under n° WO 2004/011238, filed by the present applicant, the machine 1 comprises a forming section 9 by which the tubular bodies 3 are fashioned in conventional manner from pre-scored diecut blanks (not illustrated, but plainly visible in the drawings of international patent application published under n° WO 2004/011238) made from multilayer or treated paper material, such as paperboard or cardboard coated with one or more layers of food-safe material suitable for liquids.

10 denotes a transfer mechanism, in its entirety, by which the aforementioned tubular bodies 3 are advanced along a feed direction D, passing through a station S in which the longitudinal edges of the single blanks are sealed or welded, toward a transfer station 11 where each one is taken up by conveying means consisting in an element 12 caused to rotate intermittently in an anticlockwise direction, as viewed in figure 1, about a horizontal axis 12a disposed transversely to the feed direction D.

More exactly, the sealing or welding station S comprises a sealing or welding device S1 mounted to a supporting and motion-inducing element A, by which the selfsame device S1 can be moved toward and away from the longitudinal edges of the tubular body 3 in a direction substantially transverse to the feed direction D.

The rotary element 12 is equipped with a plurality of radial bearer elements or mandrels 13 presenting free ends 13a of substantially cylindrical appearance, positionable one by one at the transfer station 11 during the rotation of the conveying element 12, in alignment with the feed direction D, in such a way that each can be ensheathed by the tubular body 3 of a relative container 2.

Located at a given point upstream of the transfer station 11, considered relative to the direction of rotation of the conveying element 12, occupying a position on the periphery of the selfsame element 12 and more exactly on a circular feed path P described by the free ends 13a of the mandrels 13, is a feed station 14 supplying the container necks 7, placed to interact with the free end 13a of each mandrel 13 and equipped with feed means indicated schematically as a block denoted 15.

As described in publication n° WO 2004/011238, the necks 7 are moulded from plastic material, having the aforementioned mouth 8 at one end and a substantially quadrangular base 16 at the opposite end, and appearing frustopyramidal in shape.

More precisely, the four faces 17 presented by the base 16 are designed, as will become clear in due course, to provide mating surfaces by way of which the neck is joined to the top end 5 of the tubular body 3.

It will be seen that the tubular bodies 3 are disposed, relative to the transfer mechanism 10, in such a way that when taken up on the mandrels 13, two of the faces 3a and 3c are disposed parallel to the direction of the circular feed path P and the other two faces 3b and 3d disposed transversely to this same direction.

Located downstream of the transfer station 11, in sequence, are a first processing station 18 and a second processing station 19 equipped with respective folding heads and sealing or welding heads, shown schematically as blocks denoted 20 and 21, by which the ends of the four faces presented by the tubular body 3 are bent into contact with the respective faces 17 presented by the base 16 of the neck 7, and the joined surfaces thereupon bonded together.

In particular, the head denoted 20 serves to direct two first side walls 6b and 6d of the frustopyramidal portion 6 against the corresponding faces 17 of the neck 7 and seal or weld the relative ends to these same faces 17, whilst the head denoted 21 serves to direct the two remaining side walls 6a and 6c of the frustopyramidal portion 6 against the corresponding faces 17 of the neck 7 and seal or weld the relative ends to these same faces 17.

As illustrated in figure 6, the frustopyramidal portion 6 is formed by a folding operation from which the four pyramidal corner edges emerge presenting four respective triangular fins 22 disposed within relative mutually orthogonal planes aligned on the longitudinal axis 2a.

Located immediately downstream of the second processing station 19, on the circular feed path P, is a further processing station denoted 23 in its entirety, at which a folding and sealing or welding unit 24 flattens each triangular fin 22 against a corresponding face of the frustopyramidal portion 6; more exactly, and as will presently become clear, the fins 22 are flattened and secured in pairs against either the two opposite walls of the frustopyramidal portion 6 denoted 6a and 6c or, equally well, against the two side walls denoted 6b and 6d, so that the container 2 assumes a configuration as illustrated in figure 7.

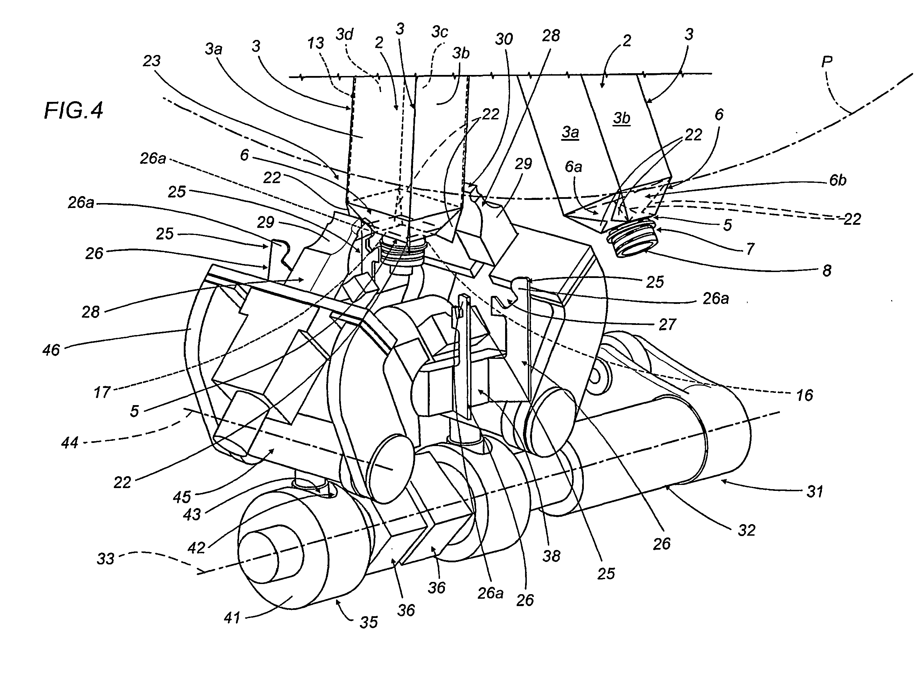

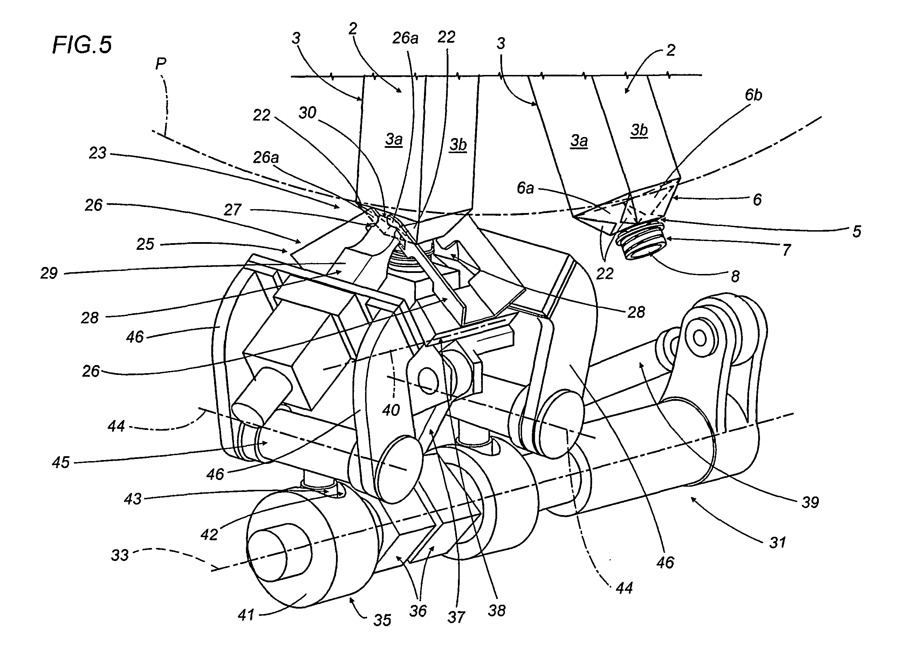

Referring to figures 4 and 5, the folding and sealing or welding unit 24 comprises folder means 25 consisting in pairs of swing arms 26 disposed symmetrically either on opposite sides of the feed path P or on opposite sides of the mandrels 13, or of the folding and sealing or welding station 23.

The arms 26 of each pair are capable of movement between a first spread position of disengagement, illustrated in figure 4, and a second operating position of engagement with two contiguous triangular fins 22, assumed at the folding and sealing or welding station 23, in which the selfsame fins are flattened by the free ends 26a of the arms against two opposite walls 6a and 6c of the frustopyramidal portion 6.

The free ends 26a of the pivoting folder arms 26 present a substantially C-shaped profile, and thus can combine to create an opening 27 when in the operating position (see figure 5).

The unit 24 further comprises sealing or welding means 28 composed of a first and a second sealer or welder 29 disposed symmetrically with and on opposite sides of the feed path P, at the aforementioned station 23.

The two sealer or welders 29 are able to swing between a first position of disengagement illustrated in figure 4, and an operating position, illustrated in figure 5, in which a contact tip 30 presented by the free end of each sealer or welder 29 passes through the aforementioned opening 27 afforded by the free ends 26a of the folder means 25 and engages the respective pair of fins 22 flattened against the corresponding wall 6a and 6c.

In practical application, the sealing or welding operation is completed before the folder means 25 return to the position of disengagement.

Following their passage through the folding and sealing or welding station 23, the containers 2 appear as in figure 7, which shows the fins 22 bonded to the two respective faces 6a and 6c of the frustopyramidal portion 6.

As concerning the various movements induced in the folder means 25 and the sealing or welding means 28, and with reference to figures 4 and 5 which illustrate one possible solution, the folding and sealing or welding unit 24 comprises drive means denoted 31 in their entirety, common to both the folder means 25 and the sealing or welding means 28.

More particularly, such drive means 31 comprise a common drive shaft 32 able to rock on an axis 33 parallel to the axis 12a of rotation of the conveying element 12 and equipped with first and second mechanical linkage means 34 and 35 interposed between the drive shaft 32 and the folder means 25 and between the drive shaft 32 and the sealing or welding means 28, respectively.

The first mechanical linkage means 34 comprise a pair of crank arms 36 keyed to the shaft 32 and connected by way of respective rods 37, one only of which is visible in figures 4 and 5, to respective mounting elements 38 carrying the aforementioned swing arms 26.

When the shaft 32 is caused to rock on its axis 33 in one direction or the other by a main connecting rod 39, the linkage rods 37 will cause the mounting elements 38, hence also the arms 26 of the folder means 25, to pivot on respective axes 40 disposed parallel to the axis 12a of rotation of the conveying element 12.

The second mechanical linkage means 35 comprise a pair of drum cams 41 keyed to the shaft 32 and affording respective tracks 42, each occupied by a relative following roller 43 such as will induce motion, about a respective axis 44, in a relative sleeve denoted 45.

Each sleeve 45 is attached by its opposite ends to a frame 46 carrying a respective sealer or welder 28.

Whenever the shaft 32 is rocked on its axis 33 in either direction by the main connecting rod 39, the drum cams 35 will cause the sleeves 45 to rock in turn on their axes 44, which extend transversely to the axis 12a of rotation of the conveying element 12, and move the sealers or welders 29 between their two limit positions.

The sealers or welders 29 of the unit denoted 24, and indeed the sealing or welding device S1 by which the longitudinal edges of the tubular body 3 are bonded, can be of any given type, for example using electrical heat seal elements, or ultrasonic welders.

Finally, at a point downstream of the folding and sealing or welding station 23, located along the circular fed path P, the conveying element 12 rotates through a final outfeed station 47 from which single containers 2 appearing as in figure 7 are released to a carousel 48 and transferred thence to further processing stations, in particular for the purpose of closing and sealing the bottom 4.

In an alternative embodiment of the machine 1, the two stations denoted 19 and 23 might be incorporated into one single station 49 (see figure 9). In this instance, during a pause of the rotary conveying element 12, the two side walls 6a and 6c of the frustopyramidal portion 6 will first be pinned against the corresponding faces 17 of the neck 7, whereupon the two pairs of fins 22 will be flattened against the walls 6a and 6c of the frustopyramidal portion 6 by folder means of the type denoted 25 in the drawings.

Finally, during the course of the same pause, the side walls 6a and 6c will be sealed or welded to the faces 17 of the neck 7 through the agency of respective sealers or welders, and the fins 22 to the respective side walls 6a and 6c by the sealing or welding means 28.

The steps both of securing the ends of the side walls 6a and 6c to the faces 17 of the neck 7, and of securing the fins 22 to the side walls 6a and 6c, can be performed by one and the same sealer or welder. The folding and sealing or welding means are represented schematically in figure 9 by the block denoted 49.

## Claims

1. A machine for forming containers (2) comprising a tubular body (3) referable to a longitudinal axis (2a), and a neck (7) presenting a substantially quadrangular base (16) fastenable coaxially to a top end (5) of the tubular body (3), wherein the tubular body (3) is joined to the neck (7) by way of a connecting portion (6) substantially frustopyramidal in shape, of which the pyramidal corner edges present respective fins (22), the machine comprising a first and a second processing station (18,19,48) for folding and sealing or welding the side walls (6a,6b,6c,6d) of the frustopyramidal portion (6) against the neck (7), wherein the fins (22) emerge from this folding operation, the machine being **characterized in** a folding and sealing or welding unit (24) including folder means (25) by which each of the fins (22) is flattened against a corresponding wall (6a, 6b, 6c, 6d) of the connecting portion (6), and sealing or welding means (28) operating in conjunction with the folder means (25), by which the fins (22) flattened against the respective walls (6a, 6b, 6c, 6d) are secured in place, the folder means (25) acting on each fin (22) comprise a swing arm (26) pivotable about a first horizontal axis (40) between a first position of disengagement, and a second position of engagement in which the selfsame fin (22) is flattened against a respective wall (6a, 6b, 6c, 6d) of the frustopyramidal connecting portion (6).

2. A machine as in claim 1, comprising conveyor means (12) set in motion intermittently along a predetermined feed path (P), by which containers (2) paired each with a relative neck (7) are fed in succession to the folding and sealing or welding unit (24) at a folding and sealing or welding station (23).

3. A machine as in claim 2, wherein the conveyor means (12) comprise an element (12) set in rotation about a respective horizontal axis (12a) and furnished with a plurality of radial bearer elements or mandrels (13) serving to support the tubular bodies (3) of the containers (2) and the respective necks (7).

4. A machine as in claim 1, wherein the folder means (25) comprise a first and a second pair of folder arms (26) pivotable about first mutually parallel horizontal axes (40) and positioned on opposite sides of the folding and sealing or welding station (23), in such a way that each pair of arms (26) can flatten a pair of fins (22) against two opposite walls (6a, 6c; 6b, 6d) of the frustopyramidal connecting portion (6) presented by the container (2).

5. A machine as in claims 1 to 4, wherein the sealing or welding means (28) comprise a first and a second sealer or welder (29) pivotable about respective second mutually parallel axes (44).

6. A machine in claims 4 and 5, wherein the folder arms (26) of each pair present respective ends (26a) combining to afford an opening (27) such as will afford a passage to a respective sealing or welding tip (30) of a sealer or welder (29) serving to secure the fins (22) to the respective wall (6a, 6c; 6b, 6d) of the frustopyramidal connecting portion (6) presented by the container (2).

7. A machine as in claims 3 to 6, wherein the first and the second pivot axes (40, 44) respectively of the folder means (25) and of the sealing or welding means (28) are disposed respectively parallel and transversely to the axis (12a) of rotation of the rotary conveying element (12).

8. A machine as in claims 1 to 7, wherein the folding and sealing or welding unit (24) comprises drive means (31) common to the folder means (25) and the sealing or welding means (28).

9. A machine as in claim 8, wherein the common drive means (31) comprise a common drive shaft (32) of which the axis (33) is disposed parallel to the axis (12a) of rotation of the rotary conveying element (12), also mechanical linkage means (34, 35) operating between the drive shaft (32) and the folder means (25) and between the drive shaft (32) and the sealing or welding means (28).

10. A machine as in claims 1 to 9, wherein the sealing or welding means (28) consist in electric heat sealers (29).

11. A machine as in claims 1 to 9, wherein the sealing or welding means (28) consist in ultrasonic welders (29).

12. A machine as in claims 3 to 11, comprising a plurality of stations ordered in sequence along the feed path (P) of the rotary conveying element (12), upstream of the folding and sealing or welding station (23), including a feed station (14) where the necks (7) are supplied to the bearer elements or mandrels (13), a station (11) where the tubular bodies (3) of the containers (2) are transferred to the mandrels (13), and a first and a second station (18, 19) where a neck (7) is applied to the end (5) of the tubular body (3) that coincides with the connecting portion (6) presenting the fins (22), by which the tubular body (3) and the neck (7) are joined.

13. A method of forming containers (2) comprising a tubular body (3) referable to a longitudinal axis (2a), and a neck (7) presenting a substantially quadrangular base (16) fastenable coaxially to a top end (5) of the tubular body (3), wherein the tubular body (3) is joined to the neck (7) by way of a connecting portion (6) substantially frustopyramidal in shape, of which the pyramidal corner edges present respective fins (22), the method comprises the steps of causing each container (2) and a respective neck (7) to advance intermittently along a predetermined feed path (P), making a first fold in two first side walls (6b, 6d) of the frustopyramidal portion (6) and a first seal or weld between the ends of the selfsame first side walls (6b,6d) and the neck (7) at a first processing station (18), making a second fold in the two remaining side walls (6a, 6c) of the frustopyramidal portion (6) at a second processing station (48), **characterized in that** at the same second station (48), folding the fins (22) emerging from the said folding operations against at least two side walls (6a, 6b, 6c, 6d) of the frustopyramidal connecting portion (6), making a second seal or weld between the ends of the two remaining side walls (6a,6c) and the neck (7), and sealing or welding the fins (22) to the at least two side walls (6a, 6b, 6c, 6d).

## Patentansprüche

1. Maschine zum Formen von Behältern (2), die einen rohrförmigen Körper (3) aufweisen, der an einer Längsachse (2a) ausgerichtet ist, sowie einen Hals (7) mit einer im Wesentlichen viereckigen Basis (16) beinhalten, die koaxial an einem oberen Ende (5) des rohrförmigen Körpers (3) befestigt werden kann, worin der rohrförmige Körper (3) mit dem Hals (7) über einen Verbindungsabschnitt (6) von im Wesentlichen pyramidenstumpfförmiger Form verbunden wird, der an den Eckkanten der Pyramide entsprechende Flügel (22) aufweist, wobei die Maschine eine erste und eine zweite Verarbeitungsstation (18, 19, 48) zum Falten und Siegeln oder Schweißen der Seitenwände (6a, 6b, 6c, 6d) des pyramidenstumpfförmigen Abschnitts (6) an den Hals (7) beinhaltet, worin die Flügel (22) aus diesem Faltvorgang hervorgehen, wobei die Maschine **dadurch gekennzeichnet ist, dass** sie eine Falt- und Siegel- oder Schweißeinheit (24) beinhaltet, bestehend aus Falteinrichtungen (25), durch die jeder der Flügel (22) flach gegen eine entsprechende Wand (6a, 6b, 6c, 6d) des Verbindungsabschnitts (6) angelegt wird, und Siegel- oder Schweißeinrichtungen (28), die mit den Falteinrichtungen (25) zusammenwirken und zur Befestigung der Flügel (22), die flach gegen die entsprechenden Wände (6a, 6b, 6c, 6d) angelegt sind, dienen, wobei die Falteinrichtungen (25), die auf jeden Flügel (22) wirken, einen Schwenkarm (26) beinhalten, der um eine erste horizontale Achse (40) schwenkbar ist zwischen einer ersten nicht eingreifenden Stellung und einer zweiten eingreifenden Stellung, in welcher der jeweilige Flügel (22) flach gegen eine entsprechende Wand (6a, 6b, 6c. 6d) des pyramidenstumpfförmigen Verbindungsabschnitts (6) angelegt wird.

2. Maschine nach Anspruch 1, die Fördereinrichtungen (12) beinhaltet, die im Schrittbetrieb entlang eines vorbestimmten Vorschubpfades (P) in Bewegung versetzt werden und die dazu dienen, die Behälter (2), die jeweils mit einem entsprechenden Hals (7) gepaart sind, nacheinander der Falt- und Siegel- oder Schweißeinheit (24) in einer Falt- und Siegel- oder Schweißstation (23) zuzuführen.

3. Maschine nach Anspruch 2, worin die Fördereinrichtungen (12) ein Element (12) beinhalten, das um eine entsprechende horizontale Achse (12a) in Drehung versetzt wird und mit mehreren radialen Trägerelementen oder Domen (13) ausgestattet ist, die zur Aufnahme der rohrförmigen Körper (3) der Behälter (2) und der entsprechenden Hälse (7) dienen.

4. Maschine nach Anspruch 1, worin die Falteinrichtungen (25) ein erstes und ein zweites Paar Faltarme (26) beinhalten, die um erste zueinander parallele horizontale Achsen (40) schwenkbar sind und auf einander gegenüberliegenden Seiten der Falt- und Siegel- oder Schweißstation (23) derart angeordnet sind, dass jedes Paar Arme (26) ein Paar Flügel (22) flach gegen zwei gegenüberliegende Wände (6a, 6c; 6b, 6d) des pyramidenstumpfförmigen Verbindungsabschnitts (6), den der Behälter (2) aufweist, anlegen kann.

5. Maschine nach den Ansprüchen 1 bis 4, worin die Siegel- oder Schweißeinrichtungen (28) ein erstes und ein zweites Siegel- oder Schweißgerät (29) beinhalten, das um entsprechende zweite zueinander parallele Achsen (44) schwenkbar ist.

6. Maschine nach den Ansprüchen 4 und 5, worin die Faltarme (26) jedes Paares entsprechende Enden (26a) aufweisen, die zusammen eine Öffnung (27) bereitstellen, die einen Durchgang für eine entsprechende Siegel- oder Schweißspitze (30) eines Siegel- oder Schweißgerätes (29) bilden, die dazu dient, die Flügel (22) an der entsprechenden Wand (6a, 6c; 6b, 6d) des pyramidenstumpfförmigen Verbindungsabschnitts (6), den der Behälter (2) aufweist, zu befestigen.

7. Maschine nach den Ansprüchen 3 bis 6, worin die ersten und die zweiten Schwenkachsen (40, 44) der Falteinrichtungen (25) bzw. der Siegel- oder Schweißeinrichtungen (28) jeweils parallel bzw. quer zu der Drehachse (12a) des drehbaren Förderelementes (12) liegen.

8. Maschine nach den Ansprüchen 1 bis 7, worin die Falt- und Siegel-oder Schweißeinheit (24) Antriebseinrichtungen (31) beinhaltet, die von den Falteinrichtungen (25) und den Siegel- oder Schweißeinrichtungen (28) gemeinsam genutzt werden.

9. Maschine nach Anspruch 8, worin die gemeinsamen Antriebseinrichtungen (31) eine gemeinsame Antriebswelle (32) beinhalten, deren Achse (33) parallel zu der Drehachse (12a) des drehbaren Förderelementes (12) liegt, sowie mechanische Verbindungsmittel (34, 35), die zwischen der Antriebswelle (32) und den Falteinrichtungen (25) sowie zwischen der Antriebswelle (32) und den Siegel- oder Schweißeinrichtungen (28) wirken.

10. Maschine nach den Ansprüchen 1 bis 9, worin die Siegel- oder Schweißeinrichtungen (28) in elektrischen Heißsiegelgeräten (29) bestehen.

11. Maschine nach den Ansprüchen 1 bis 9, worin die Siegel- oder Schweißeinrichtungen (28) in Ultraschall-Schweißgeräten (29) bestehen.

12. Maschine nach den Ansprüchen 3 bis 11, die mehrere Stationen beinhaltet, die in Reihenfolge entlang des Vorschubpfades (P) des drehbaren Förderelementes (12), stromaufwärts vor der Falt- und Siegel-oder Schweißstation (23), angeordnet sind und Folgendes beinhalten: eine Zuführstation (14), in der die Hälse (7) den Trägerelementen oder Domen (13) zugeführt werden, ein Station (11), in der die rohrförmigen Körper (3) der Behälter (2) an die Dorne (13) übergeben werden, und eine erste und eine zweite Station (18, 19), in denen ein Hals (7) an dem Ende (5) des rohrförmigen Körpers (3) angebracht wird, das dem Verbindungsabschnitt (6) entspricht, der die Flügel (22) aufweist und den rohrförmigen Körper (3) und den Hals (7) miteinander verbindet.

13. Methode zum Formen von Behältern (2), die einen rohrförmigen Körper aufweisen (3), der an einer Längsachse (2a) ausgerichtet ist, sowie einen Hals (7) beinhalten, der eine im Wesentlichen viereckige Basis (16) aufweist, die koaxial an einem oberen Ende (5) des rohrförmigen Körpers (3) befestigt werden kann, worin der rohrförmige Körper (3) mit dem Hals (7) über einen Verbindungsabschnitt (6) von im Wesentlichen pyramidenstumpfförmiger Form verbunden ist, der an den Eckkanten der Pyramide entsprechende Flügel (22) aufweist, wobei die Methode folgende Schritte beinhaltet: Vorschieben jedes Behälters (2) und eines entsprechenden Halses (7) im Schrittbetrieb entlang eines vorbestimmten Vorschubpfades (P); Anfertigen einer ersten Faltung in zwei ersten Seitenwänden (6b, 6d) des pyramidenstumpfförmigen Abschnitts (6) und einer ersten Siegelung oder Schweißung zwischen den Enden dieser ersten Seitenwände (6b, 6d) und dem Hals (7) an einer ersten Verarbeitungsstation (18); Anfertigen einer zweiten Faltung in den zwei verbleibenden Seitenwänden (6a, 6c) des pyramidenstumpfförmigen Abschnitts (6) an einer zweiten Verarbeitungsstation (48), **dadurch gekennzeichnet, dass** sie an der genannten zweiten Station (48) folgende Schritte beinhaltet: Falten der Flügel (22), die aus den genannten Faltvorgängen hervorgehen, gegen zumindest zwei Seitenwände (6a, 6b, 6c, 6d) des pyramidenstumpfförmigen Verbindungsabschnitts (6); Anfertigen einer zweiten Siegelung oder Schweißung zwischen den Enden der zwei verbleibenden Seitenwände (6a, 6c) und dem Hals (7), und Siegeln oder Schweißen der Flügel (22) an zumindest zwei Seitenwände (6a, 6b, 6c, 6d).

## Revendications

1. Une machine pour la formation de contenants (2) comprenant un corps tubulaire (3) présentant un axe longitudinal (2a), et un col (7) présentant une base (16) essentiellement quadrangulaire et pouvant être associée coaxialement à une extrémité supérieure (5) dudit corps tubulaire (3), où le corps tubulaire (3) est raccordé au col (7) par l'intermédiaire d'une partie de raccordement (6) de forme essentiellement troncopyramidale, dont les arêtes d'angle pyramidales présentent des ailettes (22) respectives, la machine comprenant une première et une deuxième station de traitement (18, 19, 48) pour plier et sceller ou souder les parois latérales (6a, 6b, 6c, 6d) de la partie troncopyramidale (6) contre le col (7), où les ailettes (22) sont obtenues à l'issue de cette opération de pliage, la machine étant **caractérisée en ce qu'**elle comprend un groupe (24) de pliage et de scellage ou soudage comprenant des moyens plieurs (25) destinés à aplatir chacune des ailettes (22) contre une paroi (6a, 6b, 6c, 6d) correspondante de la partie de raccordement (6), et des moyens de scellage ou soudage (28) coopérant avec les moyens plieurs (25) et destinés à fixer en place les ailettes (22) aplaties contre les parois (6a, 6b, 6c, 6d) respectives, les moyens plieurs (25) agissant sur chaque ailette (22) comprennent un bras oscillant (26) pouvant pivoter autour d'un premier axe horizontal (40) entre une première position de désengagement, et une deuxième position d'engagement dans laquelle l'ailette (22) elle-même est aplatie contre une paroi (6a, 6b, 6c, 6d) respective de la partie de raccordement (6) troncopyramidale.

2. La machine selon la revendication 1, **caractérisée en ce qu'**elle comprend des moyens transporteurs (12) mus par intermittence le long d'un parcours d'avancement (P) prédéfini et servant à alimenter en succession des contenants (2) appariés chacun avec un col (7) respectif au groupe (24) de pliage et de scellage ou soudage, au niveau d'une station (23) de pliage et de scellage ou soudage.

3. La machine selon la revendication 2, **caractérisée en ce que** les moyens transporteurs (12) comprennent un élément (12) mis en rotation autour d'un axe horizontal (12a) respectif et équipé d'une pluralité d'éléments de support ou mandrins (13) radiaux servant à supporter les corps tubulaires (3) des contenants (2) et les cols (7) respectifs.

4. La machine selon la revendication 1, **caractérisée en ce que** les moyens plieurs (25) comprennent une première et une deuxième paire de bras plieurs (26) pouvant pivoter autour de premiers axes horizontaux (40) parallèles entre eux et disposés sur des côtés opposés de la station (23) de pliage et de scellage ou soudage, de manière à ce que chaque paire de bras (26) puisse aplatir une paire d'ailettes (22) contre deux parois opposées (6a, 6c; 6b, 6d) de la partie de raccordement (6) troncopyramidale présentée par le contenant (2).

5. La machine selon les revendications de 1 à 4, **caractérisée en ce que** les moyens de scellage ou soudage (28) comprennent un premier et un deuxième dispositif (29) de scellage ou soudage pouvant pivoter autour de deuxièmes axes (44) respectifs parallèles entre eux.

6. La machine selon les revendications 4 et 5, **caractérisée en ce que** les bras plieurs (26) de chaque paire présentent des extrémités (26a) respectives qui se combinent pour définir une ouverture (27) constituant un passage pour une extrémité (30) respective de scellage ou soudage d'un dispositif (29) de scellage ou soudage servant à fixer les ailettes (22) sur la paroi (6a, 6c; 6b, 6d) respective de la partie de raccordement (6) troncopyramidale présentée par le contenant (2).

7. La machine selon les revendications de 3 à 6, **caractérisée en ce que** les premiers et deuxièmes axes (40, 44) de pivotement, respectivement, des moyens plieurs (25) et des moyens de scellage ou soudage (28) sont respectivement parallèles et transversaux à l'axe (12a) de rotation de l'élément rotatif de transport (12).

8. La machine selon les revendications de 1 à 7, **caractérisée en ce que** le groupe (24) de pliage et de scellage ou soudage comprend des moyens d'entraînement (31) qui sont communs aux moyens plieurs (25) et aux moyens de scellage ou soudage (28).

9. La machine selon la revendication 8, **caractérisée en ce que** les moyens d'entraînement (31) communs comprennent un arbre moteur (32) commun dont l'axe (33) est parallèle à l'axe (12a) de rotation de l'élément rotatif de transport (12), ainsi que des moyens de liaison mécanique (34, 35) agissant entre l'arbre moteur (32) et les moyens plieurs (25) et entre ce même arbre moteur (32) et les moyens de scellage ou soudage (28).

10. La machine selon les revendications de 1 à 9, **caractérisée en ce que** les moyens de scellage ou soudage (28) consistent en des dispositifs de thermoscellage électriques (29).

11. La machine selon les revendications de 1 à 9, **caractérisée en ce que** les moyens de scellage ou soudage (28) consistent en des dispositifs de soudage par ultrasons (29).

12. La machine selon les revendications de 3 à 11, **caractérisée en ce qu'**elle comprend une pluralité de stations disposées en séquence le long du parcours d'avancement (P) de l'élément rotatif de transport (12), en amont de la station (23) de pliage et de scellage ou soudage, comprenant une station d'alimentation (14) où les cols (7) sont alimentés aux éléments de support ou mandrins (13), une station (11) où les corps tubulaires (3) des contenants (2) sont transférés sur les mandrins (13), et une première et une deuxième station (18, 19) où un col (7) est appliqué sur l'extrémité (5) du corps tubulaire (3) qui coïncide avec la partie de raccordement (6) présentant les ailettes (22) et par l'intermédiaire de laquelle le corps tubulaire (3) et le col (7) sont raccordés.

13. Un procédé pour la formation de contenants (2) comprenant un corps tubulaire (3) présentant un axe longitudinal (2a), et un col (7) présentant une base (16) essentiellement quadrangulaire et pouvant être associée coaxialement à une extrémité supérieure (5) dudit corps tubulaire (3), où le corps tubulaire (3) est raccordé au col (7) par l'intermédiaire d'une partie de raccordement (6) de forme essentiellement troncopyramidale, dont les arêtes d'angle pyramidales présentent des ailettes (22) respectives, le procédé comprend les phases consistant à faire avancer par intermittence chaque contenant (2) et un col (7) respectif le long d'un parcours d'avancement (P) prédéfini, à réaliser un premier pli dans deux premières parois latérales (6b, 6d) de la partie (6) troncopyramidale et un premier scellage ou soudage entre les extrémités de ces mêmes premières parois latérales (6b, 6d) et le col (7) au niveau d'une première station de traitement (18), à réaliser un deuxième pli dans les deux parois latérales restantes (6a, 6c) de la partie (6) troncopyramidale au niveau d'une deuxième station de traitement (48), ledit procédé étant **caractérisé en ce qu'**il comprend, au niveau de cette même deuxième station (48), les phases consistant à plier les ailettes (22) obtenues à l'issue desdites opérations de pliage contre au moins deux parois latérales (6a, 6b, 6c, 6d) de la partie de raccordement (6) troncopyramidale, à réaliser un deuxième scellage ou soudage entre les extrémités des deux parois latérales restantes (6a, 6c) et le col (7), et à sceller ou souder les ailettes (22) sur lesdites au moins deux parois latérales (6a, 6b, 6c, 6d).
